Europäisches Patentamt

European Patent Office

Office européen des brevets

(11) Publication number: **0 384 344**
**A2**

## (12) EUROPEAN PATENT APPLICATION

(21) Application number: **90103130.2**

(22) Date of filing: **19.02.90**

(51) Int. Cl.⁵: **B23B 13/02, B23Q 7/06**

(30) Priority: **22.02.89 IT 1953089**

(43) Date of publication of application:
**29.08.90 Bulletin 90/35**

(84) Designated Contracting States:
**CH DE ES FR GB LI NL SE**

(71) Applicant: **CUCCHI GIOVANNI & C. S.r.l.**
**Via Genova, 4**
**I-20060 Bussero Milano(IT)**

(72) Inventor: **Cucchi, Giovanni**
**Via Genova, 4**
**I-20060 Bussero (Milan)(IT)**

(74) Representative: **Coloberti, Luigi**
**Via E. de Amicis No. 25**
**I-20123 Milano(IT)**

(54) **Bar feeder for machine tools.**

㊸ A feeding device for guiding and feeding bars to machine tools; the device comprises several bar guide units comprising upper (18) and lower (17) self-centering guide parts in which each guide unit comprises a plurality of spaced apart and oppositely oriented cross-members (19a, 19b) having semicircular surface means (47, 48) arranged on the sides of a bar to be guided, and in which the cross-member (19a) of one guide part (17) in each unit (11) are disposed between cross-member (19a) of the other guide part (18) in such a way that a passage having adjustable width, corresponding to the cross-dimension of the bars (15) to be guided, is defined.

Fig. 4

EP 0 384 344 A2

This invention relates to a feeding device for guiding and feeding bars to machine tools, such as automatic lathes and the like, in which the bars are slidably supported and fed towards the spindle of the machine tool in such a way that they can freely rotate.

From previous European Patent application (EP-A-89119597.6) of the same applicant, feeding devices are known for guiding bars to the spindle of machine tools, which comprise first and second carriages movable along horizontal rails, in which each carriage is provided with a rotating bush member for supporting and sliding of the bars. The internal diameter of each bush member substantially corresponds to the outer diameter of the bars; therefore, when the cross-dimensions of the bars vary the bushes on all the guide carriages have to be replaced each time so as to avoid rattling and vibrations caused by the bars rotating at high speeds, stopping the machine tool for a long period once or several times a day according to the machining requirements, all of which involves a considerable waste of time and a consequent reduction in the working capacity of the machine tool and loss of production.

From EP-A- 213659 and from EP-A- 145668, are likewise known bar guiding devices, comprising a plurality of guide units capable of opening and closing to allow insertion of the bars; the guide units are arranged longitudinally on the periphery of a rotating drum which each time aligns each individual bar to the spindle of the machine tool. Likewise in this case the individual guide units are designed to feed bars of the one same diameter without the possibility of using the same units for feeding bars of different diameters, unless all the units on the drum are replaced, resulting in a considerable waste of time and high costs.

On the other hand, when machining bars by means of machine tools, in particular automatic lathes, there is often the need to machine bars of different diameters or of considerably differing cross- dimensions, for example between 5 and 100 mm. There is therefore the need to have available a universal feeder, capable of automatically adjusting in order to feed different types of bars, without having to intervene each time to remove and replace the bar guide parts on the same feeder.

An object of this invention is to provide a bar feeding device for feeding and guiding bars of different cross-dimension to a chuck of a machine tool, capable of maintaining the bars constantly aligned with the chuck in order to meet variable working requirements, at the same time facilitating the initial insertion of the bar into the collet of the chuck.

A further object of this invention is to provide a device for guiding and feeding bars as defined above, which can be easily adapted to feed bars of different diameter or dimensions, without causing rattlings and without having to disassemble or remove parts of the device.

A further object of the invention is to provide a device for guiding and feeding bars to machine tools, which automatically self-adjusting in order to feed bars of different dimensions and shapes, in an extremely short length of time, without having to stop the machine tool and the relative production.

These and other objects according to the invention are achieved by means of a bar feeding device, for guiding and feeding bars to machine tools, such as automatic lathes and the like, comprising the characteristics of the claim 1. Further features are defined in the dependent claims. In the drawings:

Fig. 1 is a schematic view of a bar feeder embodying this invention;

Fig. 2 is an enlarged cross sectional view along line 2-2 of Figure 1;

Fig. 3 is an enlarged view of a guide unit for the bar feeder of Figure 1;

Fig. 4 is a perspective view of the upper part of the guide unit of Figure 3, without the control members;

Fig. 5 is a side view of the lower guide part for the unit of Figure 3;

Fig. 6 is a view along line 6-6 of Figure 5;

Figs, 7 and 8 are two end views of a guide unit in two different operative conditions;

Fig. 9 shows a particular embodiment of a guide element according to this invention;

Fig. 10 is a sectional view along line 10-10 of Figure 9, with some parts removed.

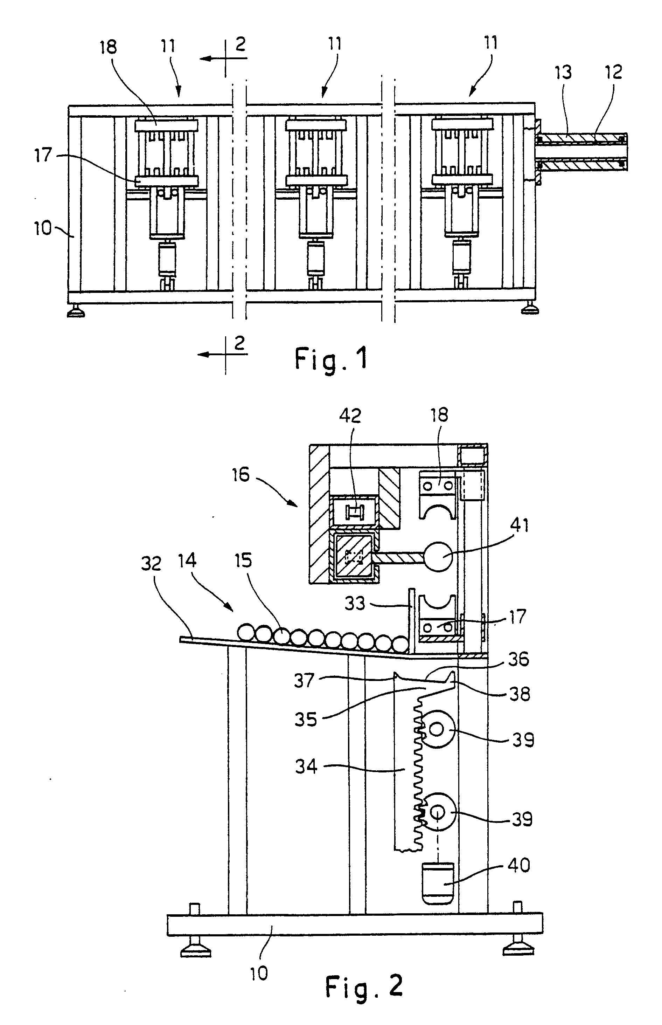

Figures 1 to 3 show overall the general features of a feeder for bars according to this invention. The feeder comprises a frame 10 to support three bar guide units 11 which are axially arranged, and aligned with a sleeve 12 rotatably supported by a tubular support element 13 at one end of the frame 10. Furthermore reference 14 in Figure 2 denotes a bar loader device for bars 15, which extends for the entire length of the feeder or part of it, while reference 16 denotes a pushing device for moving forward a bar along and through the guide units 11.

Each guide unit 11 is composed of two opposed guide parts and more precisely by a lower guide part 17 and an upper guide part 18 shown in detail in the other figures. The two guide parts 17 and 18 of each unit comprise a plurality of shaped guide members 19a and 19b, in the form of cross-pads in elastomeric or plastic anti-frictional material fastened to a support base, as described hereunder; the cross-pads 19a and 19b are spaced apart each other and are transversally arranged to the feeding direction of the bars, hereinafter indicated also as longitudinal feeding direction, in order to support from both sides and guide a bar 15 towards the chuck of a machine tool, at the same time enabling it to rotate.

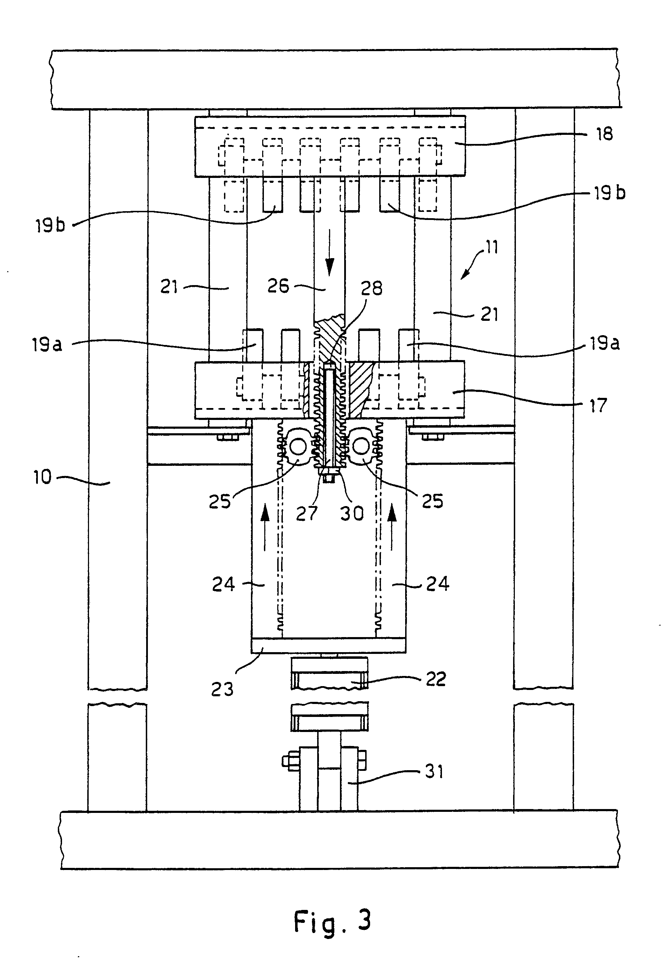

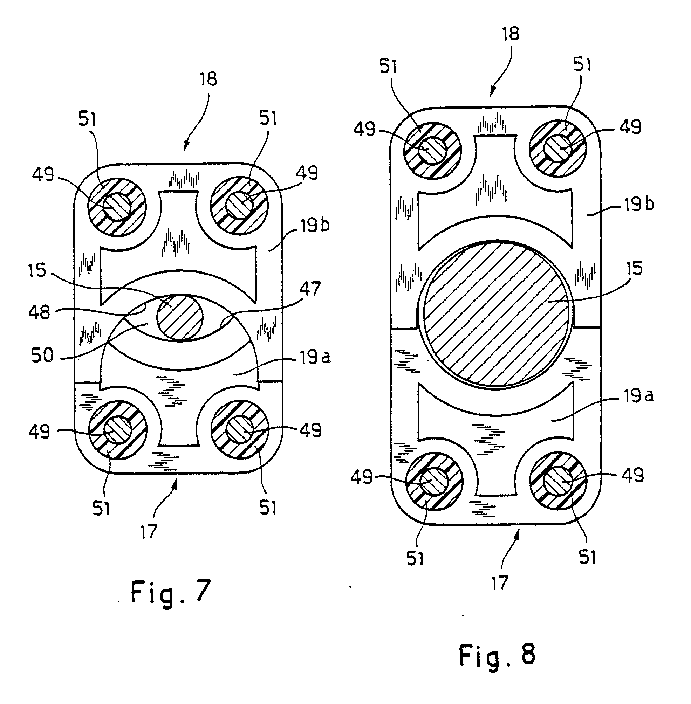

The guide parts 17 and 18, in each unit 11, have bar guiding surfaces and can be moved between a first operative position, shown in Figure 3, in which the two guide parts 17, 18 are retracted to enable the insertion of a bar 15, and a second forward advanced operative position, shown for example in Figures 7, 8 in which said guide parts 17 and 18 of the units 11 support and guide the bar 15 towards the chuck of the machine tool.

In order to allow a self-centering action of the two guide parts 17 and 18 in each guide unit 11 and therefore a constant alignment of the bar guiding surfaces independently of the diameters or cross-dimensions of the bars 15 to be fed, both guide parts 17 and 18 of each unit 11 are moved between the two operative positions along vertical rods 21 fastened to the frame 10 of the device. As shown in figure 3 both guide parts 17, 18 are operatively connected to a linear control device 22 by means of a power transmission system which enables the two guide parts 17, 18 to move towards and away from each other at the same time. In the case shown use has been made of an actuator 22 in the form of a hydraulic or pneumatic cylinder, connected by means of a crosspiece 23 to a pair of lateral racks 24 in turn fastened to the lower cross-head of the guide part 17. Each rack 24 engages with a pinion 25 which in turn engages with a double central rack 26 downwardly extending from the upper guide part 18. Therefore the movement in one direction, for example upwards, of the lower guide part 17, actuated by the cylinder 22, causes the downward movement, that is to say in an opposite direction, of the upper guide part 18, by means of the rack system keeping a positional relation of parts 17, 18 during movement. It is nevertheless clear that in the place of the rack drive device shown in Fig. 3, it is possible to adopt any other mechanical, hydraulic, pneumatic system, or any combination of these, provided that it is suitable for enabling a self-centering action between the two guide units 11.

In order to ensure that the two guide parts 17, 18 stop in a suitable closed condition allowing to move forward and to rotate the bars without causing vibrations or rattling, or without blocking the rotation of the bars themselves, the two guide parts 17, 18 are provided with adjustable stop means for example in the form of a threaded pin 27 which screws into a hole 28 to project downwards from the central rack 26 of the upper guide part 18 to hit against a corresponding stop member borne or constituted by the crosspiece 23 connected to the lower guide part 17. A nut 30 or other equivalent means enables the pin 27 to be locked in the required axial adjusted position. The actuator 22 is in turn linked in 31 to the frame 10 of the feeder. The rack system 24, 26 may be substituted by any other control device for example by a worm screw system or similar devices.

As previously related, the feeder in Figure 1 is provided with a loader 14 for the bars 15; in the example shown the loader 14 comprises a slanted plane, for example defined by rods 32 fastened to the frame 10 in correspondence with each guide unit 11; positioned in proximity of the lower guide part 17 is a stop element 33 for the bars 15 to be fed. Rack means 34, only one of which is shown in fig. 2, are positioned below the supporting rods 32 and have a lateral arm 35 provided with an upper edge 36 downwardly slanted an having upwardly oriented pointed projections 37 and 38 on the opposite side. The rack 34 engages with pinions 39 connected to a drive motor 40; by raising the rack 34 the pointed projection 37 inserts between the last two bars on the right of the supporting rods 32, taking the bar 15 closest to the stop member 33 by raising it beyond the latter to enable the same to rotate to the right, until it is positioned between the guide parts 17, 18 of each guide unit 11.

Finally 16 in Figure 2 denotes a bar pushing device 15 which in the specific case comprises a pushing member 41 coaxially arranged to the guide bush 12, suitably connected to a chain drive system 42 or suitable control means.

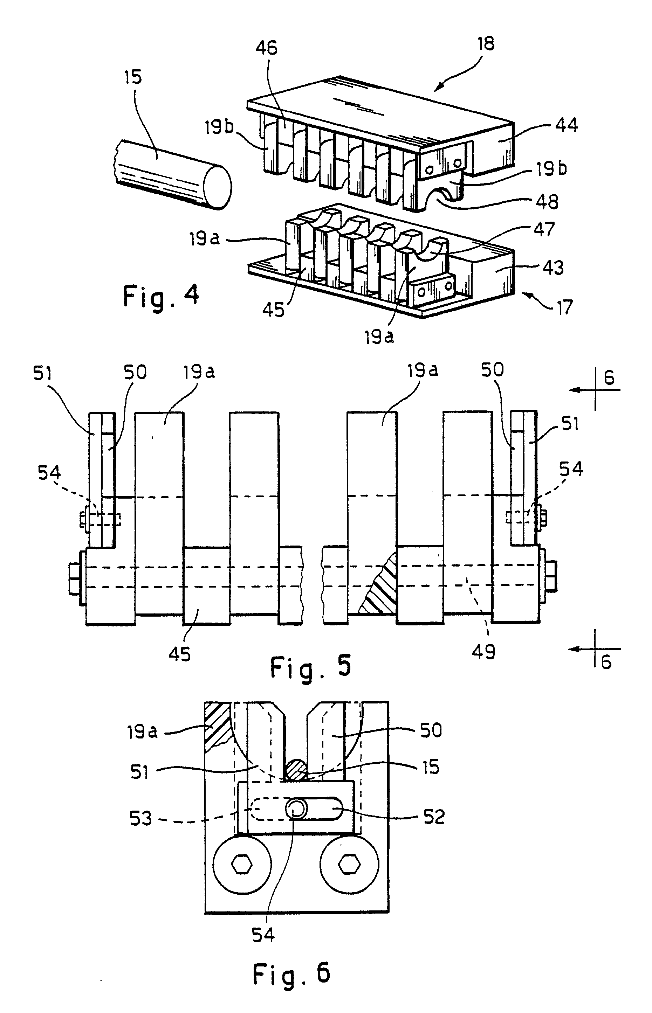

Returning to the examples in Figures 3 and 4, it can be noted that each guide part 17 and 18 in each guide unit 11, comprises a base element 43 and 44 to which the pad members 19a and 19b are fastened, as shown. In particular the pad members 19a of the lower guide part 17, (Figures 4 and 5) are parallely arranged and maintained spaced apart from one another by means of the interposition of spacer members 45, having thickness equal to or suitable for that of the pad members 19a themselves. Similarly, the pad members 19b of the upper guide part 18, are maintained spaced apart from each other by means of spacer elements 46 completely similar to the previous ones. Furthermore the lower guide or pad members 19a of a unit 11 are shifted in the longitudinal direction previously referred to, in relation to the upper guide members 19b so that they can dispose between one anothers defining an aligned sets of passages or guide openings for the bars as explained hereunder.

Each pad member 19a and 19b is C-shaped or provided with a semicircular cavity 47, 48 on the side turned towards the bar 15 so as to define oppositely oriented guide surfaces.

The pad members 19a, 19b are fastened to the respective support base by means of tie rods 49 (Figure 5) which enable them to be removed.

Each guide part 17, 18 can if required have at one or both ends bar centering means, for example in the form of a pair of L-squares 50, 51 provided with slots 52, 53 through which a clamping bolt 54 passes. By slackening the bolt 54 it is possible to move the squares 50, 51 arranging them in an appropriate position on both sides of a bar 15 to prevent the latter, when subjected to rapid rotation, from vibrating avoiding o reducing generation of noise and vibrations in the whole structure of the feeder. The length of the slots 52 and 53 should therefore be such as to enable to adjust the L-squares position for bars of minimum and maximum diameters to pass therethrough.

Figures 7 and 8 show the fundamental features of the guide units for the feeding device according to this invention. As related previously, each guide unit is composed of a lower guide part 17 and an upper guide part 18, opposed to the previous one; each guide unit in turn comprises a plurality of shaped pad members 19a, 19b which alternately positioned with each other. The guide or pad members 19a and 19b in turn have semicircular guide surfaces 47, 48 which overall define a guide passage for the bar 15, substantially ovoidal in shape, defined by the opposed outlines of the semicircular cavities of the alternate pad members 19a and 19b. It is clear therefore that by moving apart the two guide parts 17, 18 in each guide units 11, and relative pad members 19a and 19b, it is possible to vary the width of the aperture 50 for the bars, measured at the centre and in a vertical direction parallel to the direction of movement of the same guide parts, adjusting in this way their opening as a function of the diameter of the bars 15 to be fed. In particular Figure 7 shows the guide arrangement for a bar 15 of minimum diameter, while Figure 8 shows the guide arrangement for a bar 15 of maximum diameter or of considerably greater cross-dimension. It is therefore clear from Figures 7 and 8, that by means of the same guide units or in other words by means of a same feeding device, it is possible to feed a machine tool with bars having different diameters, without having to replace any part of the feeder, but simply adjusting the stops 27, in each unit, as a function of the diameter of the bars to be guided. Since adjustment of the stops 27 can be performed in an extremely rapid and easy manner, it is no longer necessary to stop the machine tool for a long period of time, which can therefore maintain a high productivity rate.

A description will be given hereunder, by way of an example, of a further preferential embodiment of the shaped guide member 19a, 19b, forming part of a guide unit 11 according to the device.

Figures 7 and 8 of the drawings show a first embodiment according to which each guide element 19a, 19b is formed in a single pad member, for example in an elastomeric material of adequate rigidity, for example with a material commercially known such as "Hytrel" or in another suitable antifrictional material. Each element 19a and 19b is supported on rods 49, by means of a damper bearings or bushes 51 in rubber, or plastic material, having characteristics of rigidity or elasticity suitable for the scope envisaged.

In the case of Figures 7 and 8, the semicircular guide surfaces 47, 48 are defined by a continuous face, nevertheless since these guide surfaces are subjected to considerable wear in time, with the solution in Figures 7-8 it would be necessary to change the entire worn element which therefore must be removed after having disassembled the entire guide unit to which it belongs; this obviously involves a waste of time and labour force costs.

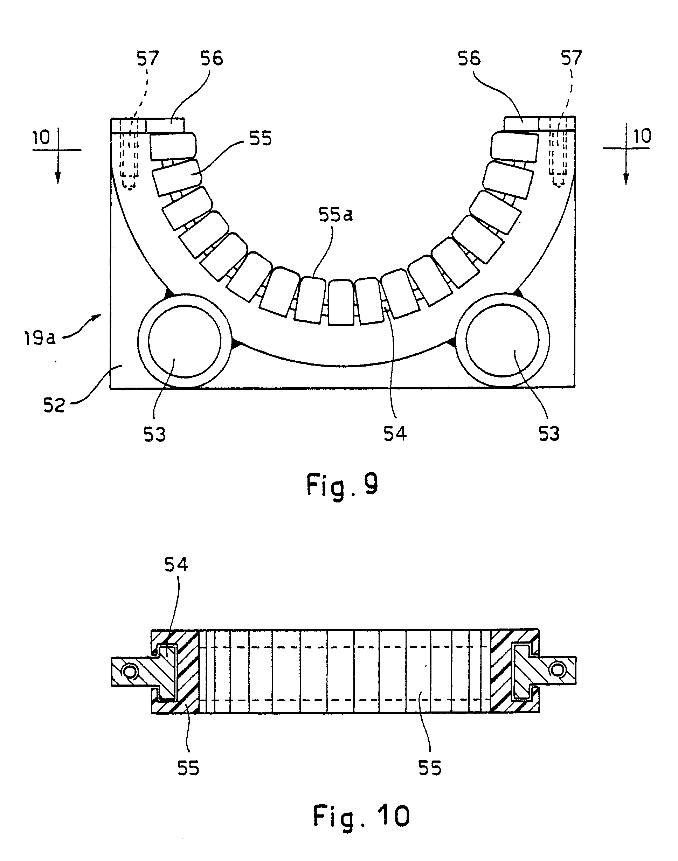

The solution of Figures 9 and 10 enables the guide surfaces of the individual elements 19a, 19b to be removed without disassembling the guide unit or part of it. To this end each guide element 19a, 19b comprises a C-shaped body 52, provided with openings 53 for the passage of the clamping tie bars. On one side body 52 has a semicircular T-shaped edge 54, provided with wings which project from both sides of the body 52. On the T-shaped edge 54 are disposed a plurality of blocks or reversably oriented C-shaped members 55 which adapts to the "T" shape of the edge 54 of the supporting body 52 in such a way that the individual blocks 55 are prevented from falling out. Each block 55 has a front guide surface 55a defining a portion of the semicircular surface for guiding the bars. The guide blocks 55 are fastened to the body 52 by means of removable retaining members 56 clamped by means of screws 57. It is therefore clear that in the case whereby some of the blocks 55 are worn or in the case whereby the majority of the blocks 55 are to be replaced, it is sufficient to remove one of the two retaining members 56, to replace worn blocks 55 with new ones, without having to disassemble the entire guide element 19, or without having to disassemble the entire guide unit.

From what has been said and shown it is therefore clear that the invention mainly relates to a bar feeder, which can be used with machine tools such as automatic lathes or the like, which is characterised by the use of individual guide units each one composed of two openable and self-centering guide parts capable of being adapted for guiding and for feeding bars of different diameters.

## Claims

1. A feeding device for feeding bars (15) to machine tool, in particular lathes and the like, comprising a supporting frame (10) for at least a first and a second bar guide unit (11), axially aligned, each guide unit (11) comprising first and second guide parts (17, 18) movable between advanced and retracted operative positions, characterised in that, each guide part (17, 18) comprises a plurality of parallely arranged bar guide elements (19a, 19b) spaced apart from one another, said bar guide elements (19a, 19b) having a semicircular bar guiding surfaces (47, 48) reversably arranged on the sides of the bar, and in which each bar guide element (19a) of one guide part (17) is disposed between guide elements (19b) of the other guide part (18) defining axially aligned openings (50) for the passage of the bars (15).

2. A device according to claim 1, characterised in that it comprises a bar pushing device (41) for slidably moving the bars (15) through the aforementioned guide units (11), said bar pushing device (41) being operatively connected to a driving means (42).

3. A devide according to claim 1 further characterised in that it comprises automatic bar loading means (14) for loading the bars (15) into the guide units (11).

4. A device according to claim 1, characterised in that it comprises control means (22, 24, 26) operatively connected to the said movable guide parts (17, 18) of said guide units (11) and means (25) for operatively interconnecting said upper and lower guide parts (17, 18) in order to move said guide parts of the guide unit simultaneously between advanced and respectively retracted operative positions.

5. A device according to claim 4, characterised in that said control means comprise at least a first and a second rack means (24, 26) connected to a respective guide part (17, 18) of a guide unit (11) and intermediate pinion members (25) connecting the aforementioned racks means (24, 26) at least one of the rack means (24) being in turn connected to a driving device (22).

6. A device according to claim 4, characterised in that adjustable stop means (23, 27) are provided for stopping the guide parts of the guide assembly (11) in their advanced condition.

7. A device according to claim 1, characterised in that each guide unit (11) comprises adjustable centering means for the bars (15).

8. A device according to claim 1, characterised in that the guide elements (19a, 19b) of each guide part (17, 18) are removably fastened to a support base member (43, 44).

9. A device according to claim 1, characterised in that each guide element (19a, 19b) comprises a C-shaped body having a semicircular T-shaped edge, and a plurality of pad members (55) closely arranged along the aforementioned semicircular edge of the body (52) and means for removably fastening the pad members (55) to the said C-shaped body (52).

10. A device according to claim 9, characterised in that said fastening means comprise lateral wings along said semicircular T-shaped edge of the body (52), and a reversably C-shaped portion on the pad members (55) slidably engaging said wings.

Fig. 1

Fig. 2

Fig. 3

Fig. 4

Fig. 5

Fig. 6

Fig. 7

Fig. 8

Fig. 9

Fig. 10